# EUROPÄISCHE PATENTSCHRIFT

(11) **EP 1 104 362 B1**
(45) Veröffentlichungstag und Bekanntmachung des Hinweises auf die Patenterteilung: **27.02.2002**
(21) Anmeldenummer: 99941786.8
(22) Anmeldetag: 18.08.1999
(51) Int. Cl.: B60N 2/34

(54) **SITZBETÄTIGUNGSSYSTEM**
SEAT-OPERATING SYSTEM
SYSTEME POUR ACTIONNER DES SIEGES

(30) Priorität: 22.08.1998 DE 19838242; 18.08.1999 HU 9902774 P
(43) Veröffentlichungstag der Anmeldung: 06.06.2001
(73) Patentinhaber: Pal, Zoltan, 1203 Hudapest (HU)
(72) Erfinder: Pal, Zoltan, 1203 Hudapest (HU)
(74) Vertreter: Kinkelin, Ulrich, Dipl.-Ing.
(86) Internationale Anmeldenummer: HU9900059
(87) Internationale Veröffentlichungsnummer: WO0010833

(56) Entgegenhaltungen:
- EP-A- 0 516 575
- WO-A-97/41000
- WO-A-99/38772
- DE-A- 3 603 404
- FR-A- 1 450 283
- GB-A- 295 962
- US-A- 2 775 996
- US-A- 4 440 439
- US-A- 5 372 339
- US-A- 5 425 516

## Beschreibung

Gegenstand der Erfindung ist ein Sitzbetätigungs-System zur Bewegung der Einzelteile von Fahrzeugsitzen zu in Liegeplätze umgestaltbare Fahrzeugsitze, welche bei langen Reisen zur Sicherung der Bequemlichkeit der Passagiere dienen.

Während der Langstreckenflüge ist eine wichtige Aufgabe die Sicherung der Bequemlichkeit bei langen, manchmal 14..20-stündigen Flügen für die Passagiere. Dies ist neben der Schaffung von Komfort ein wesentliches Element des Wettbewerbs der einzelnen Luftfahrtgesellschaften, da die Reisenden bei gleichen Preisen im allgemeinen den Service mit größerer Bequemlichkeit wählen. Die Unbequemlichkeiten bei längeren Reisen treten ebenso bei Langstrecken-Autobusreisen auf, wo die Reisenden sich während der gesamten Fahrt auf relativ kleinem Raum sitzend aufhalten müssen.

Für die Lösung des oben genannten Problems gibt es verschiedene Ansätze der Fahrzeughersteller und Konstrukteure. Einer der Hauptlösungswege ist die Konstruktion solcher Sitze, welche zur Erhöhung der Bequemlichkeit der Passagiere flachgelegt werden, bzw. in verschiedener Weise zu Liegeplätzen verstellt werden können.

Ein System gemäß dem Oberbegriff des Anspruchs 1 ist z.B. aus der Druckschrift WO 97/41000 bekannt. Im Falle der dort vorgestellten Lösung wird zur Gestaltung als Liegeplatz jeder zweite Sitz angehoben, jeder weitere zweite Sitz bleibt an seinem Platz. Bei Anhebung wird in Richtung der Rücklehne zuerst von einem Teleskop der angehobene Sitz ausgehoben, sodann öffnet sich der Sitz beim Verbindungspunkt der Sitzfläche und der Rücklehne, wird flach, und als Fußstütze unter der Sitzfläche wird eine Fußbank geöffnet. Zwar bleibt der Passagier bei der Anhebung und Absenkung auf dem Sitz, der Betrieb der Lösung bedingt allerdings einen komplizierten Mechanismus, die Realisierung der Teleskopanhebung ist mechanisch schwerfällig, kritisch und instabil.

Ein in Fahrzeugen anwendbarer umstellbarer Sitz wird in EP 516 575 vorgestellt. Bei der darin vorgestellten Lösung hebt ein Hebemechanismus die Rücklehne des Sitzes, während die Sitzfläche vorgeschoben wird und so aus dem Sitz ein Liegeplatz wird. Sein Nachteil ist, daß zum Umbau des Sitzes der Passagier aufstehen muß, dies ist bei Flügen kritisch, weil in Flugzeugen nur ein kleiner Teil der Reisenden aufstehen kann. Im Notfall ist die sofortige Möglichkeit der Rückstellung in die Grundlage nicht gegeben.

Weiterhin wird eine zum Liegeplatz umstellbare Sitzeinheit in GB 295 962 bzw. US 5 425 516 beschrieben. Die genannten Lösungen sind schwer zu bedienen, ihre Umstellung ist schwerfällig, sie bieten keinen entsprechenden Komfort.

Nachteil der vorgestellten Lösungen ist, daß während der Umgestaltung der Sitze zu Liegeplätzen von den Passagieren Mehraufwand, besondere Operationen erfordert werden. So können etwa die Reisenden sämtliche Sitze nur einmal umstellen, und dazu muß der Reiseraum zeitweilig verlassen werden. Dies ist beim derzeitigen Flugzeugverkehr schwer zu realisieren, beschränkt also stark die Anwendung derartiger Lösungen. Die andere typische Lösung ist die, daß mehrere Sitze bzw. Sitzgruppen gleichzeitig zu Liegeplätzen umgestaltet werden können. Dies stimmt nicht immer mit den individuellen Ansprüchen der Passagiere überein. Bei einer weiteren Gruppe der Lösungen nehmen die aus den Sitzen umgestalteten Liegeplätze mehr Raum ein, als die Sitze selbst, und beschränken so die Bewegung im Passagierraum.

Bei der Ausarbeitung der Lösung dieser Erfindung war unser Ziel die Ausarbeitung eines solchen Sitzverstellungs-Systems, welches die Bewegung und Umgestaltung von einem bzw. mehreren Fahrzeugsitzen und deren einfache Umstellung zu Liegeplätzen ermöglicht.

Bei der Lösung des Problemes entsprechend haben wir erkannt, daß, wenn bei der Gestaltung der Sitzverstell-Systeme ein oder mehrere Fahrzeugsitze auf verschiebbaren Gestellen angeordnet werden, deren Achse in der auf dem Gestell gebildeten Kulisse verschiebbar ist, das gestellte Ziel realisierbar ist.

Die gestelte Aufgabe wird erfindungs gemäß durch die Kombination der Merkmale des Anspruchs, gelöst.

Wesentlich für die Erfindung ist, daß zur Leitung der Achsen während der Umklappung im Haltegestell eine Kulisse ausgebildet ist. Zweckmäßig ist, daß das Haltegestell ein der Anhebung des Haltegestells dienender hydraulischer oder pneumatischer oder mechanischer oder elektromechanischer Bewegungsapparat vorgesehen ist, das am Boden des Fahrzeuges auf beweglicher Achse drehbar angebrachte Haltegestell mit einer mit hydraulischer oder mechanischer oder elektromechanischer Verstelleinheit versehenen Hebesäule verbunden ist, und auf dem Haltegestell hintereinander zwei oder drei oder vier oder fünf Fahrzeugsitze angebracht sind. Vorteilhaft sind die zwischen den mit Klappen verbundenen Teilen der Fahrzeugsitze hydraulische oder pneumatische oder mechanische oder elektromechanische Bewegungseinheiten oder Stoßdämpfer angebracht. Die Rücklehne oder die Sitzfläche des Fahrzeugsitzes ist mit dem Haltegestell verbunden oder an diesem drehbar angebracht.

Die Erfindung wird nachfolgend mit Hilfe der beigelegten Darstellungen vorgestellt:

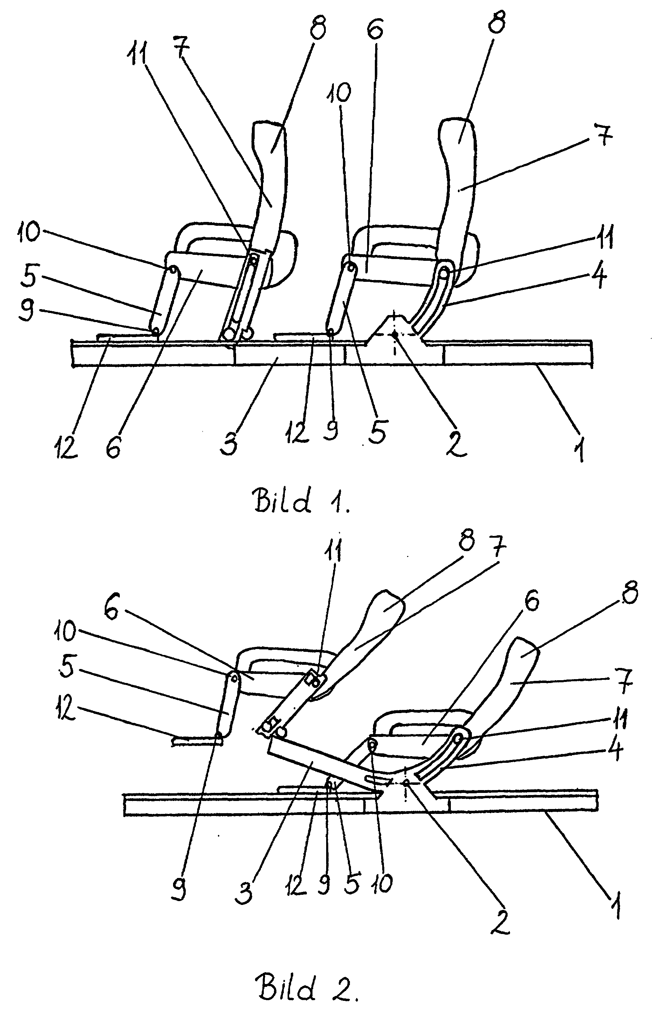

Bild 1.-4. zeigen das Sitzbetätigungssystem der Erfindung für kulissenbewegte Haltegestelle während der Umstellung der Fahrzeugsitze von Sitzposition in Liegeposition.

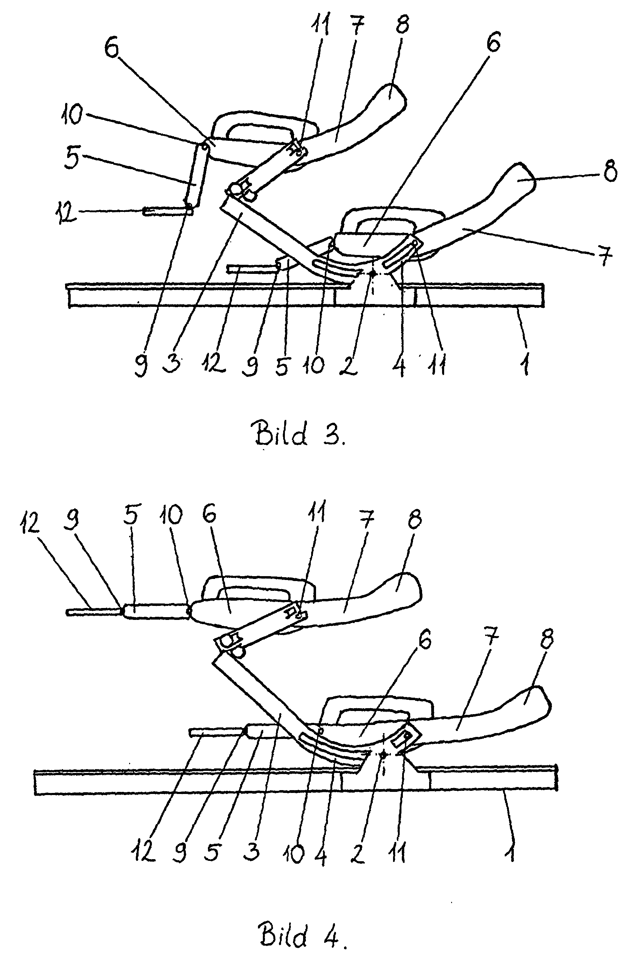

Die Bilder 1.-4.stellen das Sitzverstellungssystem laut Erfindung dar im Falle von Kulissenbewegungs-Haltegestell während der Umgestaltung der Fahrzeugsitze von Sitz- in Liegestellung. Bild 1.zeigt den Kulissenverstellungs-Apparat in Sitzstellung der Fahrzeugsitze. Bild 2.zeigt den Kulissenverstellungs-Apparat in teilweise abgesenkter Stellung. Bild 3.zeigt den den Kulissenverstellungs-Apparat in weiter abgesenkter Liegestellung. Bild 4.zeigt den Kulissenverstellungs-Apparat in Liegestellung.

Auf den Bildern 1.-4.sind die auf Haltegestell 3 hintereinander angeordneten aus Fußteile 5, Sitzflächen 6 und Rückenlehnen 7 bestehenden Fahrzeugsitze zu sehen, welche mit den Scharnieren 10,11 miteinander verbunden sind. In der Gestaltung laut Darstellung sind mit den Fußteilen 5 mit den Scharnieren 9 weitere Fußhalter 12 verbunden. Die Rückenlehnen 7 sind in der Ausführung laut Darstellung auch mit Kopflehnen 8 versehen. In der Grundstellung der Fahrzeugsitze sind die Haltegestelle 3 in der Grundstellung am Boden von Fahrzeug 1. Diese Sitzstellung wird von den Scharnieren 9,10,11 bzw. den die Teile der Sitze verbindenden Elementen begrenzt.

Die Umstellung der Sitze in Liegeposition erfolgt mit der Anhebung des Haltegestells 3. Neben der Anhebuung des Haltegestells 3 ist den Zeichnungen zu entnehmen, daß die Fahrzeugsitze kontinuierlich angehoben werden. Bei Anhebung bewegt sich auf der an das Unterteil des Fahrzeugs 1 befestigten Achse 2 das Haltegestell 3 in der darin herausgebildeten Kulisse 4 geleitet. Das Haltegestell 3 dreht sich in diesem Fall auf der an den Unterteil 1 des Fahrzeuges angebrachten Achse 2 derart, daß sich inzwischen die Kulisse 4 nach vorne bewegt. Die Verstellung des Haltegestells 3 in der Kulisse 4 erfolgt vorteilhaft mit Zahnleiste, Zahnkranz oder mittels pneumatischer oder hydraulischer Bewegung. Bei Verstellung oder Bewegung nach vorn hebt sich das in der Kulisse 4 geleitete Haltegestell 3 über den Boden des Fahrzeugs 1, und die im Haltegestell 3 angeordneten Fahrzeugsitze werden in den auf den Bildern 2.,3.gezeigten Phasen zu Sitzen in Liegestellung umgebildet.

Im auf Bild 4.sichtbaren Zustand ist der Vorderteil von Haltegestell 3 zusammen mit den auf diesem befindlichen Fahrzeugsitz bereits in völlig angehobenem Zustand. Die Sitze sind dann vollkommen ausgestreckt, wenn sie mit dem Boden des Fahrzeugs vorteilhaft parallel sind. Diese Liegestellung wird ebenfalls durch die Scharniere 9,10,11, sowie die die Teile der Sitze verbindenden Elemente bestimmt.

## Patentansprüche

1. Sitzbetätigungs-System zur Bewegung der Enzelteile (3,5,6,7,9,10,11,12) von Fahrzeugsitzen zu in Liegeplätze umgestaltbare Fahrzeugsitze, welche aus zueinander verdrehbar verbundenen Fußteilen (5), Sitzflächen(6), Rückenlehnen (7) und ggf. durch Kopflehnen (8) ergänzt, bestehen und die während ihrer Bewegung in Sitz- oder Liegeposition wegebegrenzt geführt sind, wobei der Fahrzeugsitz am Boden des Fahrzeugs (1) an einem Haltegestell(3) installiert ist, welches um eine Achse (2) derart verstellt werden kann, daß das Haltegestell (3) in Sitzposition mit dem Fußteil (5), der Sitzfläche (6) und der Rückenlehne (7) den Sitz bildet, und wobei in Liegeposition das am Haltegestell (3) installierte Fußteil (5), die Sitzfläche (6) und die Rückenlehne (7) eine zum Boden des Fahrzeugs (1) parallel gerichtete Liegefläche als klappbare Einheit bilden, und wobei die Achse (2) fix am Boden des Fahrzeugs (1) vorgesehen ist, **dadurch gekennzeichnet, daß**
am Haltegestell (3) zwei Fahrzeugsitze (5,6,7,8) hintereinander angebracht sind,
daß das drehbare Haltegestell (3) mit einer darin ausgebildeten Kulisse (4) an der fixen Achse (2) geführt ist, so daß sich bei der Umstellung von der Sitzposition in die Liegeposition die Kulisse (4) und das Haltegestell (3) nach vorne bewegen und dabei die Fahrzeugsitze (5,6,7,8) in die Liegeposition umgebildet werden.

2. Sitzbetätigungs-System nach Anspruch 1, **dadurch gekennzeichnet, daß** das Haltegestell (3) mit einem seiner Anhebung dienenden hydraulischen, pneumatischen oder mechanischen Bewegungsapparat verbunden ist.

3. Sitzbetätigungs-System nach Anspruch 1, **dadurch gekennzeichnet, daß** zwischen den mit Klappen (9,10,11) verbundenen Teilen der Fahrzeugsitze (3,5,6,7,8) hydraulische, pneumatische, mechanische oder elektromechanische Bewegungseinheiten oder Stoßdämpfer angebracht sind.

4. Sitzbetätigungs-System nach Anspruch 1, **dadurch gekennzeichnet, daß** die Rückenlehne (7) oder die Sitzfläche (6) des Fahrzeugsitzes mit dem Haltegestell (3) verbunden oder an diesem drehbar angebracht ist.

## Claims

1. Seat-operating system for moving the individual parts (3, 5, 6, 7, 9, 10, 11, 12) of vehicle seats to form vehicle seats which can be transformed into reclining places, comprise foot parts (5), seat surfaces (6), backrests (7), optionally supplemented by headrests (8), which parts are connected rotatably to one another, and are guided, in a manner limited in displacement, during their movement into the sitting or reclining position, the vehicle seat being installed on the floor of the vehicle (1) on a holding framework (3) which can be adjusted about an axis (2) in such a manner that in the sitting position, the holding framework (3) forms the seat together with the foot part (5), the seat surface (6) and the backrest (7), and in the reclining position, the foot part (5), which is installed on the holding framework (3), the seat surface (6) and the backrest (7), in the form of a hinged unit, form a reclining surface which is directed parallel to the floor of the vehicle (1), and the axis (2) being provided fixedly on the floor of the vehicle (1), **characterized in that** two vehicle seats (5, 6, 7, 8) are fitted one behind the other on the holding framework (3), **in that** the rotatable holding framework (3) is guided, by means of a slotted guide (4) formed in it, on the fixed axis (2), with the result that during the conversion from the sitting position into the reclining position, the slotted guide (4) and the holding framework (3) move forwards and, in the process, the vehicle seats (5, 6, 7, 8) are reformed into the reclining position.

2. Seat-operating system according to Claim 1, **characterized in that** the holding framework (3) is connected to a hydraulic, pneumatic or mechanical movement apparatus used for raising it.

3. Seat-operating system according to Claim 1, **characterized in that** hydraulic, pneumatic, mechanical or electromechanical movement units or shock absorbers are fitted between those parts of the vehicle seats (3, 5, 6, 7, 8) which are connected to hinges (9, 10, 11).

4. Seat-operating system according to Claim 1, **characterized in that** the backrest (7) or the seat surface (6) of the vehicle seat is connected to the holding framework (3) or is fitted rotatably to it.

## Revendications

1. Système d'actionnement de siège pour le déplacement des parties individuelles (3, 5, 6, 7, 9, 10, 11, 12) de sièges de véhicule en sièges de véhicule transformables en couchette, lequel siège de véhicule est constitué de pièces de pieds (5) reliées à rotation les unes aux autres, d'une surface d'assise (6) et d'un dossier (7), éventuellement complété d'un appuie-tête (8), qui pendant leur déplacement vers la position d'assise ou de couchette sont guidés de manière à limiter le déplacement, le siège de véhicule étant installé sur le fond du véhicule (1) sur un bâti de maintien (3) qui peut être déplacé autour d'un axe (2) de telle sorte que dans la position assise, le bâti de maintien (3) forme le siège avec la partie de pied (5), la surface d'assise (6) et le dossier (7), et dans la position de couchette, la partie de pied (5) installée sur le bâti de maintien (3), la surface d'assise (6) et le dossier (7) forment une entité basculable configurée comme surface de couchette orientée parallèlement par rapport au fond du véhicule (1), l'axe (2) étant prévu fixe sur le fond du véhicule (1), **caractérisé en ce que** deux sièges de véhicule (5, 6, 7, 8) sont installés l'un derrière l'autre sur le bâti de maintien (3), **en ce que** le bâti de maintien (3) rotatif est guidé sur l'axe fixe (2) par un coulisseau (4) qui y est formé de telle sorte que lors du passage de la position d'assise dans la position de couchette, le coulisseau, (4) et le bâti de maintien (3) se déplacent vers l'avant et que les sièges de véhicule (5, 6, 7, 8) sont passés dans la position de couchettes.

2. Système d'actionnement de siège selon la revendication 1, **caractérisé en ce que** le bâti de maintien (3) est relié à un appareil de déplacement hydraulique, pneumatique ou mécanique qui sert à le relever.

3. Système d'actionnement de siège selon la revendication 1, **caractérisé en ce que** des amortisseurs ou unités de déplacement hydrauliques, pneumatiques, mécaniques ou électromécaniques sont installés entre les parties des sièges de véhicule (3, 5, 6, 7, 8) reliées par des clapets (9, 10, 11).

4. Système d'actionnement de siège selon la revendication 1, **caractérisé en ce que** le dossier (7), la surface d'assise (6) du siège de véhicule sont reliés au bâti de maintien (3) ou installés à rotation sur ce dernier.
